# EUROPEAN PATENT SPECIFICATION

(11) **EP 1 574 390 B1**
(45) Date of publication and mention of the grant of the patent: **11.02.2009**
(21) Application number: 04425167.6
(22) Date of filing: 12.03.2004
(51) Int. Cl.: B60N 2/30, B60N 2/36, B60R 21/02

(54) **Vehicle, in particular a commercial vehicle, with a collapsible front passenger seat**
Fahrzeug, insbesondere Nutzfahrzeug, mit falt-/klappbaren vorderen Beifahrersitz
Véhicule, en particulier pour véhicule utilitaire, avec siège de passager escamotable

(43) Date of publication of application: 14.09.2005
(73) Proprietor: C.R.F. Società Consortile per Azioni, 10043 Orbassano (Torino) (IT)
(72) Inventor: Caroli, Andrea, 10043 Orbassano (Torino) (IT); Naclerio, Lino, 10043 Orbassano (Torino) (IT); Gobetto, Enrico, 10043 Orbassano (Torino) (IT)
(74) Representative: Jorio, Paolo

(56) References cited:
- DE-A- 3 909 397
- DE-A- 4 128 527
- DE-A- 19 802 154
- FR-A- 2 814 129
- FR-A- 2 818 205
- FR-A- 2 821 805
- GB-A- 471 000
- US-A- 5 527 087

## Description

The present invention relates to a vehicle, in particular a commercial vehicle, with a collapsible front passenger seat to extend a rear loading compartment.

Front passenger seats are known which are collapsible, to extend the loading compartment into the passenger compartment alongside the driver's seat, by rotating the seat portion of the seat laterally or frontwards, and then lowering the seatback forward into the space formerly occupied by the seat portion.

A need is felt to simplify known solutions of the above type, which take a relatively long time and/or involve relatively complex operations to move the seat portion first, and then the seatback. A need is also felt to keep the front seat area separate from the rear loading compartment to prevent freight in the loading compartment from slipping accidentally into the passenger compartment when the vehicle is moving, and/or in the event of a road accident, when the front passenger seat is not collapsed.

Patent application GB471000 discloses a vehicle having a rear floor provided with displaceable flaps, which are hinged at their rear edges and adapted to be turned upwardly to form back rests upholstered, while a cushion, carried by links, can be swung into desired position for seating when the flaps are lifted.

Patent US5527087 discloses a seat apparatus for a vehicle which includes a front and a rear brackets having respective lower ends pivoted to a floor of the vehicle, a seat-cushion pivoted to the upper ends of the brackets, and a seat-back having a lower end connected fixedly to the rear bracket.

Patent application FR2818205 discloses a vehicle comprising a front central passenger seat, which is placed between a front lateral passenger seat and a driver's seat and is hinged to a load stop frame placed behind the driver's seat.

Patent application DE19802154 discloses a mounting for headrests, which is attached by a pivot on the roof of a motor vehicle, while patent application DE4128527 discloses a car having a luggage space separable from the front seat passengers by a partition, which extends from the undersurface of the roof to the upper edge of the backrest of the front seat.

It is an object of the present invention to provide a vehicle, in particular a commercial vehicle, having a collapsible front passenger seat, and which provides for meeting the above requirements in a straightforward, low-cost manner.

According to the present invention, there is provided a vehicle, in particular a commercial vehicle, as defined in claim 1.

A non-limiting embodiment of the invention will be described by way of example with reference to the accompanying drawings, in which:
Figures 1 to 3 show schematic cross sections of a sequence of steps to collapse a front passenger seat of a preferred embodiment of a vehicle, in particular a commercial vehicle, in accordance with the present invention;
Figure 4 shows a schematic rear view, with parts removed for clarity, of the passenger compartment of the Figure 1 to 3 vehicle;
Figure 5 shows a schematic view in perspective, with parts removed for clarity, of the Figure 4 passenger compartment.

Number 1 in the accompanying drawings indicates as a whole a vehicle, in particular a commercial vehicle (shown partly), defining a rear loading compartment 2 and a front passenger compartment 3.

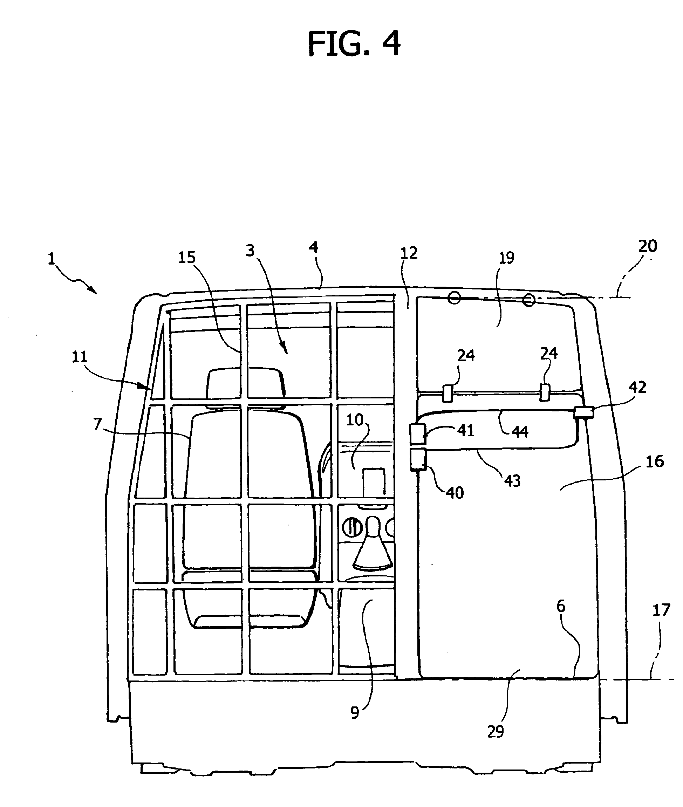

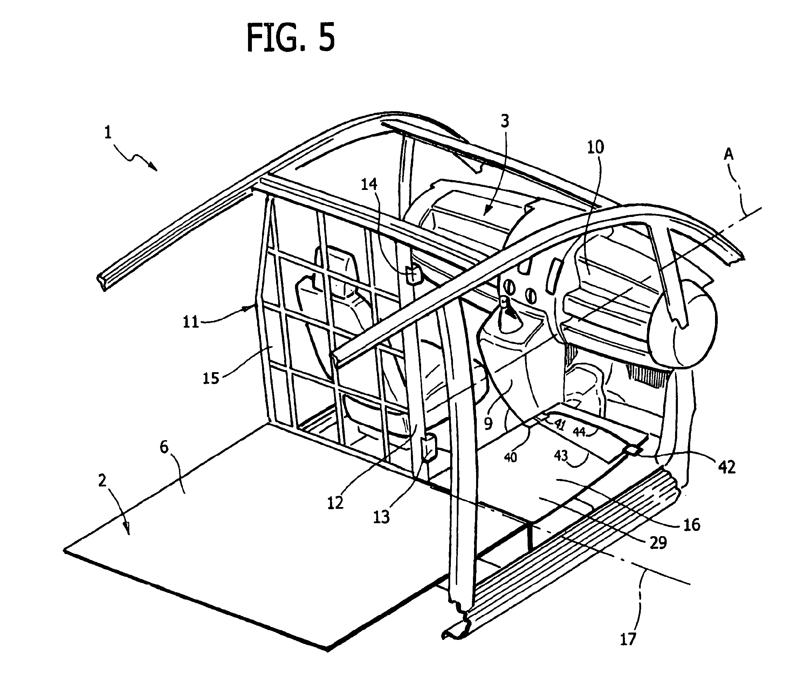

Passenger compartment 3 and loading compartment 2 are defined at the top by a roof 4, and at the bottom by a floor 5 and a loading bed 6 respectively. With reference to Figures 4 and 5, passenger compartment 3 houses a driver's seat 7 and a front passenger seat 8 fitted side by side to floor 5 and separated by a tunnel 9 projecting rearwards from instrument panel 10 of passenger compartment 3 in a longitudinal direction A of vehicle 1.

Passenger compartment 3 has no rear seats, and is separated from loading compartment 2 by a partition 11, which may be defined by solid or perforated walls, by transparent or opaque walls, by netting, or by other substantially vertical means for defining the front of loading compartment 2 across the whole width of vehicle 1, and preventing freight intruding into passenger compartment 3.

Partition 11 comprises a fixed intermediate post 12 fitted with a winding device 13 and a guide device 14 (shown schematically) of the seatbelt of seat 8, and with a striker (not shown) for a lock. Partition 11 also comprises two walls 15, 16 substantially aligned with each other on opposite sides of post 12. Wall 15 is fixed, and extends from bed 6 to roof 4, between seat 7 and loading compartment 2; while wall 16 extends upwards from bed 6, between seat 8 and loading compartment 2, and has a bottom edge hinged to bed 6 about a horizontal axis 17 perpendicular to direction A.

Partition 11 also comprises a top lateral wing 19 located over wall 16 and alongside post 12, and which is hinged to roof 4, about an axis 20 substantially parallel to axis 17, to rotate between a lowered work position extending crosswise to roof 4 and forming an extension of wall 16, and a raised rest position tucked away and extending parallel to roof 4.

Wing 19 is retained in the raised position by connection (not described in detail) to a cross member 22 of roof 4, and, in the lowered position, is connected releasably to the top edge of wall 16 by two spaced latches 24 (shown schematically).

In a variation not shown, wing 19 is fitted with a headrest of seat 8.

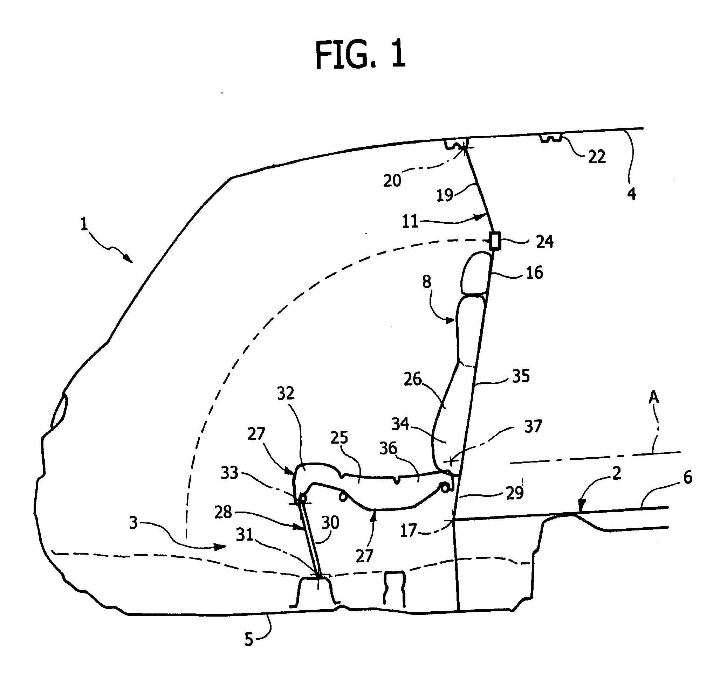

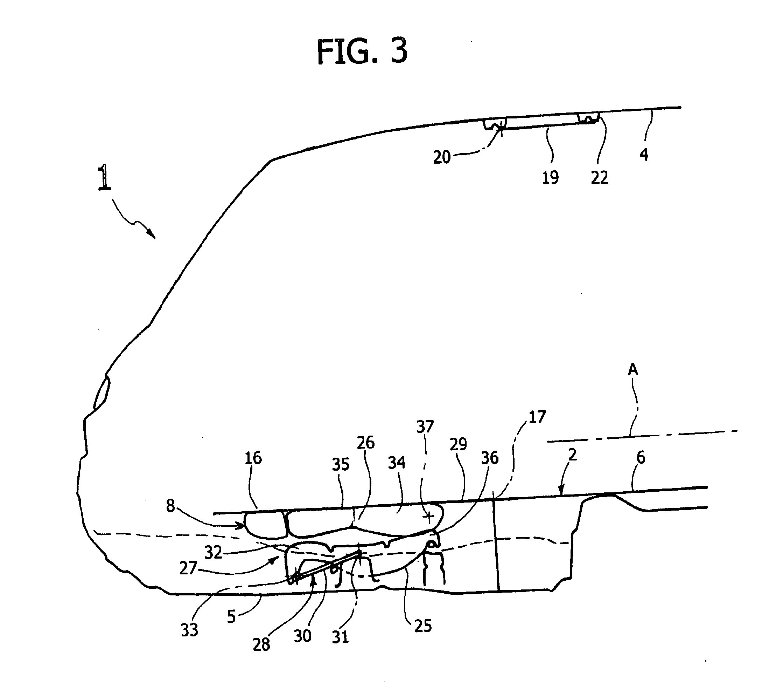

With reference to Figures 1 to 3, the seat portion 25 and seatback 26 of seat 8, and wall 16 are articulated to form part of a mechanism 27 connecting floor 5 to wall 16, and which enables seat portion 25, seatback 26, and wall 16 to move simultaneously, in response to action on any one of the three, between an upright configuration (Figure 1) and a collapsed configuration (Figure 3). In the upright configuration, seat 8 defines a passenger station, and wall 16 rests against post 12; and, in the collapsed configuration, seat 8 is stowed away on floor 5, beneath an ideal extension of bed 6, and wall 16 is aligned seamlessly with bed 6 to extend loading compartment 2 into passenger compartment 3 in lieu of the passenger station.

Mechanism 27 comprises an articulated quadrilateral device 28 interposed between seat 8 and floor 5, and comprising a rear lever 29 defined by a bottom portion of wall 16, and a front lever 30 hinged at opposite ends to floor 5 about a fixed axis 31, and to a front portion 32 of seat portion 25 about a movable axis 33.

Seatback 26 comprises a supporting body 34 defined by upholstered foam; and a rear frame 35 supporting body 34 and at least partly forming an integral part of wall 16, so that seatback 26 and wall 16 are connected integrally to each other and hinged to a rear portion 36 of seat portion 25 about a movable axis 37.

With reference to Figures 4 and 5, wall 16 is fitted with a bottom lock 40 and a top lock 41 (shown schematically): lock 40 locks wall 16, in the upright configuration, to said striker (not shown) on post 12; and lock 41 locks wall 16, and therefore the whole of mechanism 27 when collapsed, to a striker (not shown) on tunnel 9 or floor 5.

Locks 40, 41 are spaced apart along the lateral edge of wall 16, and are released by manually operating a release member 42 connected to locks 40, 41 by respective Bowden cable transmissions 43, 44.

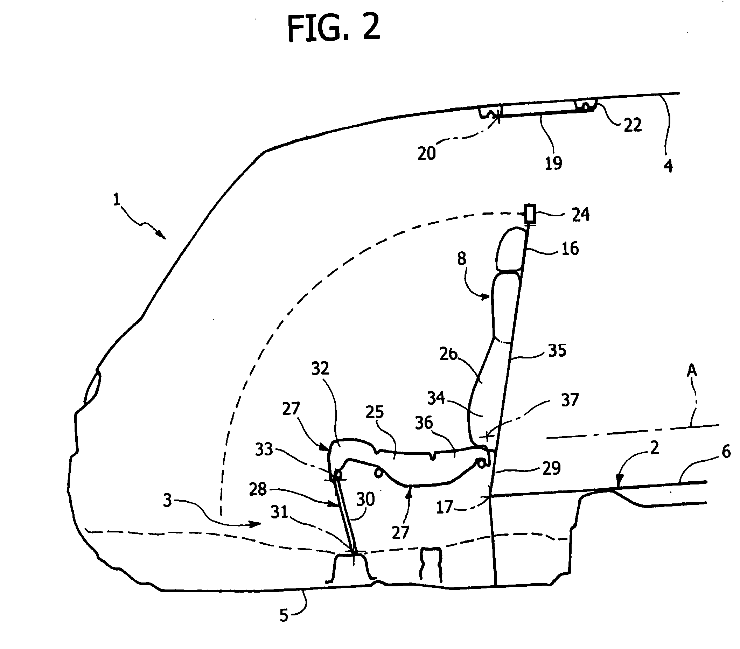

With particular reference to Figure 2, to collapse the assembly defined by seat portion 25, seatback 26, and wall 16, latches 24 are released from wall 16, and wing 19 is rotated into the raised rest position and connected to cross member 22.

Release member 42 is then operated manually to release lock 40, and any one of the component parts of mechanism 27 is acted on to move axes 33, 37 forwards, rotate seat portion 25, seatback 26, and wall 16 down into the fully collapsed position, and secure lock 41 to tunnel 9.

To lift seat 8 up into the upright configuration to restore the passenger station, lock 41 is released, and wall 16, and therefore seatback 26, is pulled upwards about axis 17. Alternatively, an actuator and/or spring mechanism may be provided, which acts on any one of the component parts of mechanism 27 to restore the upright configuration.

Partition 11 thus prevents freight in loading compartment 2 from intruding into passenger compartment 3 when seat 8 is in the upright configuration. At the same time, the assembly defined by seat portion 25, seatback 26, and wall 16 is relatively easy and fast to collapse. In fact, by articulating seat portion 25, seatback 26, and wall 16 to move simultaneously, they can be pushed or pulled into the collapsed or upright configuration in one single movement.

Mechanism 27 is relatively straightforward, in that seatback 26 is partly incorporated in wall 16, and wall 16 forms part of articulated quadrilateral device 28.

Locks 40, 41 and latches 24 secure wall 16 safely and simply in both the collapsed and upright configuration.

Partition 11 is extremely practical, not only in defining loading compartment 2 and being partly collapsible, but also in being relatively strong and safe.

Clearly, changes may be made to vehicle 1 as described herein as long they remain within the definition of the appended claims.

In particular, wall 16 may be detached from the seatback, and, as opposed to being fixed, may be connected movably to the seatback, e.g. by means of a sliding or lever coupling.

Articulated quadrilateral device 28 may be replaced by or combined with guide-and-slide devices and/or other linkages for connection to floor 5.

Stop mechanisms may be provided in addition to and/or other than lock 40, lock 41, and latches 24.

Partition 11 may only partly separate loading compartment 2 from passenger compartment 3, i.e. may have a top edge detached from roof 4.

Finally, seat portion 25 may be hinged about axis 37 of seatback 26, as opposed to wall 16, and/or locking devices may be provided in addition to or other than locks 40, 41.

## Claims

1. A vehicle (1), in particular a commercial vehicle, defining a rear loading compartment (2) and a passenger compartment (2) housing a driver's seat (7) and at least one front passenger seat (8); the front passenger seat (8) comprising a seat portion (25) and a seatback (26) and being movable between an upright configuration defining a passenger station, and a collapsed configuration wherein said loading compartment (2) is extended to replace said station; **characterised by** comprising a partition (11) separating said loading compartment (2) from said passenger compartment (3) across the whole width of the vehicle, and comprising:
- a first lateral wall (16,19) interposed between said front passenger seat (8) and said loading compartment (2) and extending up to a roof (4) of the vehicle, and
- a second lateral wall (15) interposed between said driver's seat (7) and said loading compartment (2);
said first lateral wall being defined by:
- a movable lower wall (16), and
- an upper wing (19), which is movable between a lowered position extending crosswise to said roof (4) and forming an extension of said lower wall (16), and a raised position extending parallel to said roof (4); first releasable locking means (24) being provided for connecting said upper wing (19) to the lower wall (16) in the lowered position; said seatback (26), said seat portion (25) and said lower wall (16) being articulated to move simultaneously between said upright and collapsed configurations in response to action on any one of said seatback (26), said seat portion (25), and said lower wall (16).

2. A vehicle as claimed in Claim 1, **characterized in that** said lower wall (16) is connected integrally to said seatback (26).

3. A vehicle as claimed in Claim 2, **characterized in that** said seatback (26) comprises a supporting body (34), and a supporting frame (35) supporting said supporting body (34); at least part of said supporting frame (35) being defined by said lower wall.

4. A vehicle as claimed in any one of the foregoing Claims, **characterized by** comprising an articulated quadrilateral device (28) connecting said front passenger seat (8) to a floor (5) of said passenger compartment (3).

5. A vehicle as claimed in Claim 4, **characterized in that** said lower wall (16) rotates with respect to said floor (5), and comprises a bottom portion (29) defining a rear lever of said articulated quadrilateral device (28).

6. A vehicle as claimed in Claim 4 or 5, **characterized in that** said seat portion (25) comprises a front portion (32) hinged to a front lever (30) of said articulated quadrilateral device (28); and a rear portion (36) hinged to said first wall (16) or said seatback (26).

7. A vehicle as claimed in any one of the foregoing Claims, **characterized in that** said second lateral wall (15) is fixed.

8. A vehicle as claimed in anyone of the preceding Claims, **characterized in that** said partition (11) comprises a post (12) located in an intermediate position between said first and said second lateral walls (16, 15) and fitted with a winding device (13) and a guide device (14) of the seatbelt of said front passenger seat (8).

9. A vehicle as claimed in any one of the foregoing Claims, **characterized by** comprising second releasable locking means (40, 41) retaining said lower wall (16) in the upright and collapsed configurations.

10. A vehicle as claimed in Claim 9, **characterized in that** said second releasable locking means (40, 41) comprise top locking means (41) and bottom locking means (40) spaced apart from one another.

11. A vehicle as claimed in anyone of the preceding Claims, **characterized in that** said upper wing (19) is fitted with a headrest of said front passenger seat (8).

12. A vehicle as claimed in any one of the foregoing Claims, **characterized in that** said loading compartment (2) is defined at the bottom by a loading bed (6); the lower wall (16) extending as a seamless extension of said loading bed (6) when in the collapsed configuration.

## Patentansprüche

1. Fahrzeug (1), insbesondere ein Nutzfahrzeug, das einen hinteren Laderaum (2) und einen Fahrgastraum (2) begrenzt, in dem sich ein Fahrersitz (7) und wenigstens ein Insassenvordersitz (8) befinden; wobei der Insassenvordersitz (8) einen Sitzabschnitt (25) und eine Sitzlehne (26) enthält und zwischen einer aufrechten Konfiguration, die eine Insassenstellung definiert, und einer zusammengeklappten Konfiguration beweglich ist, in der der Laderaum (2) erweitert ist, um diese Stellung zu ersetzen; **dadurch gekennzeichnet, dass** es eine Trennwand (11) enthält, die den Laderaum (2) vom Fahrgastraum (3) über die gesamte Breite des Fahrzeugs trennt, und enthaltend:
eine erste Seitenwand (16, 19), die zwischen dem Insassenvordersitz (8) und dem Laderaum (2) angeordnet ist und sich bis zu einem Dach (4) des Fahrzeugs erstreckt, und
eine zweite Seitenwand (15), die zwischen dem Fahrersitz (7) und dem Laderaum (2) angeordnet ist;
wobei die erste Seitenwand definiert ist durch:
eine bewegliche untere Wand (16), und
einen oberen Flügel (19), der zwischen einer abgesenkten Stellung, die sich quer zum Dach (4) erstreckt und eine Erweiterung der unteren Wand (16) ausbildet, und einer angehobenen Stellung beweglich ist, die parallel zum Dach (4) verläuft; wobei eine erste lösbare Verriegelungseinrichtung (24) vorgesehen ist, die den oberen Flügel (19) mit der unteren Wand (16) in der abgesenkten Stellung verbindet; wobei die Sitzlehne (26), der Sitzabschnitt (25) und die untere Wand (16) beweglich sind, um sich gleichzeitig zwischen der aufrechten und der zusammengeklappten Konfiguration in Erwiderung auf eine Tätigkeit an der Sitzlehne (26), dem Sitzabschnitt (25) oder der unteren Wand (16) zu bewegen.

2. Fahrzeug nach Anspruch 1, **dadurch gekennzeichnet, dass** die untere Wand (16) integral mit der Sitzlehne (26) verbunden ist.

3. Fahrzeug nach Anspruch 2, **dadurch gekennzeichnet**, das die Sitzlehne (26) einen Tragkörper (34) und einen Tragrahmen (35) enthält, der den Tragkörper (34) trägt; wobei wenigstens ein Teil des Tragrahmens (35) durch die untere Wand definiert ist.

4. Fahrzeug nach einem der vorhergehenden Ansprüche, **dadurch gekennzeichnet, dass** es eine bewegliche, viereckige Vorrichtung (28) enthält, die den Insassenvordersitz (8) mit einem Boden (5) des Fahrgastraumes (3) verbindet.

5. Fahrzeug nach Anspruch 4, **dadurch gekennzeichnet, dass** sich die untere Wand (16) im Bezug auf den Boden (5) dreht und einen unteren Abschnitt (29) enthält, der einen hinteren Hebel der beweglichen, viereckigen Vorrichtung (28) definiert.

6. Fahrzeug nach Anspruch 4 oder 5, **dadurch gekennzeichnet, dass** der Sitzabschnitt (25) einen vorderen Abschnitt (32), der an einem vorderen Hebel (30) der beweglichen, viereckigen Vorrichtung (28) angebracht ist; und einen hinteren Abschnitt (36) enthält, der mit einer ersten Wand (16) der Sitzlehne (26) gelenkig verbunden ist.

7. Fahrzeug nach einem der vorhergehenden Ansprüche, **dadurch gekennzeichnet, dass** die zweite Seitenwand (15) fixiert ist.

8. Fahrzeug nach einem der vorhergehenden Ansprüche, **dadurch gekennzeichnet, dass** die Trennwand (11) eine Stütze (12) enthält, die sich in einer Zwischenposition zwischen der ersten und der zweiten Seitenwand (16, 15) befindet und mit einer Wickelvorrichtung (13) sowie eine Führungsvorrichtung (14) des Sicherheitsgurtes des Insassenvordersitzes (8) ausgestattet ist.

9. Fahrzeug nach einem der vorhergehenden Ansprüche, **dadurch gekennzeichnet, dass** es eine zweite lösbare Verriegelungseinrichtung (40, 41) enthält, die die untere Wand (16) in der aufrechten und geklappten Konfiguration hält.

10. Fahrzeug nach Anspruch 9, **dadurch gekennzeichnet, dass** die zweite lösbare Verriegelungseinrichtung (40, 41) eine obere Verriegelungseinrichtung (41) und eine untere Verriegelungseinrichtung (40) enthält, die voneinander beabstandet sind.

11. Fahrzeug nach einem der vorhergehenden Ansprüche, **dadurch gekennzeichnet, dass** der obere Flügel (19) mit einer Kopfstütze des Insassenvordersitzes (8) ausgestattet ist.

12. Fahrzeug nach einem der vorhergehenden Ansprüche, **dadurch gekennzeichnet, dass** der Laderaum (2) am Boden durch eine Ladefläche (6) definiert ist; wobei sich die untere Wand (16) als nahtlose Erweiterung der Ladefläche (6) in der zusammengeklappten Konfiguration erstreckt.

## Revendications

1. Véhicule (1), en particulier un véhicule utilitaire, définissant un compartiment de chargement arrière (2) et un compartiment pour passagers (2) logeant un siège conducteur (7) et au moins un siège passager avant (8) ; le siège passager avant (8) comprenant une partie siège (25) et un dossier (26) et étant mobile entre une configuration redressée définissant une position du passager, et une configuration escamotée dans laquelle ledit compartiment de chargement (2) est étendu pour remplacer ladite position ; **caractérisé en ce qu'**il comprend une cloison (11) séparant ledit compartiment de chargement (2) dudit compartiment passagers (3) sur toute la largeur du véhicule, et **en ce qu'**il comprend :
- une première paroi latérale (16, 19) intercalée entre ledit siège passager avant (8) et ledit compartiment de chargement (2) et s'étendant vers le haut jusqu'à un toit (4) du véhicule, et
- une deuxième paroi latérale (15) intercalée entre ledit siège conducteur (7) et ledit compartiment pour passagers (2) ;
ladite première paroi latérale étant définie par :
- une paroi inférieure mobile (16), et
- une aile supérieure (19), qui est mobile entre une position abaissée s'étendant perpendiculairement audit toit (4) et formant une extension de ladite paroi inférieure (16), et une position relevée s'étendant parallèlement audit toit (4) ;
des premiers moyens de verrouillage libérables (24) prévus pour raccorder ladite aile supérieure (19) à la paroi inférieure (16) dans la position abaissée; ledit dossier (26), ladite partie siège (25) et ladite paroi inférieure (16) étant articulés de façon à se déplacer simultanément entre lesdites configurations redressée et escamotée en réponse à une action sur l'un quelconque dudit dossier (26), de ladite partie siège (25) et de ladite paroi inférieure (16).

2. Véhicule selon la revendication 1, **caractérisé en ce que** ladite paroi inférieure (16) est solidaire dudit dossier (26).

3. Véhicule selon la revendication 2, **caractérisé en ce que** ledit dossier (26) comprend un corps de support (34) et un châssis de support (35) supportant ledit corps de support (34) ; au moins une partie dudit châssis de support (35) étant définie par ladite paroi inférieure.

4. Véhicule selon l'une quelconque des revendications précédentes, **caractérisé en ce qu'**il comprend un dispositif formant quadrilatère articulé (28) raccordant ledit siège passager avant (8) à un plancher (5) dudit compartiment pour passagers (3).

5. Véhicule selon la revendication 4, **caractérisé en ce que** ladite paroi inférieure (16) tourne par rapport audit plancher (5), et comprend une partie basse (29) définissant un levier arrière dudit dispositif formant quadrilatère articulé (28).

6. Véhicule selon la revendication 4 ou 5, **caractérisé en ce que** ladite partie siège (25) comprend une partie avant (32) articulée à un levier avant (30) dudit dispositif formant quadrilatère articulé (28) ; et une partie arrière (36) articulée à ladite première paroi (16) ou audit dossier (26).

7. Véhicule selon l'une quelconque des revendications précédentes, **caractérisé en ce que** ladite deuxième paroi latérale (15) est fixe.

8. Véhicule selon l'une quelconque des revendications précédentes, **caractérisé en ce que** ladite cloison (11) comprend un montant (12) situé en position intermédiaire entre lesdites première et deuxième parois latérales (16, 15) et équipé d'un dispositif d'enroulement (13) et d'un dispositif de guidage (14) de la ceinture de sécurité dudit siège passager avant (8).

9. Véhicule selon l'une quelconque des revendications précédentes, **caractérisé en ce qu'**il comprend des seconds moyens de verrouillage libérables (40, 41) retenant ladite paroi inférieure (16) dans les configurations redressée et escamotée.

10. Véhicule selon la revendication 9, **caractérisé en ce que** lesdits seconds moyens de verrouillage libérables (40, 41) comprennent un moyen de verrouillage supérieur (41) et un moyens de verrouillage inférieur (40) espacés l'un de l'autre.

11. Véhicule selon l'une quelconque des revendications précédentes, **caractérisé en ce que** ladite aile supérieure (19) est équipée d'un repose-tête dudit siège passager avant (8).

12. Véhicule selon l'une quelconque des revendications précédentes, **caractérisé en ce que** ledit compartiment de chargement (2) est défini en partie inférieure par un fond de chargement (6) ; la paroi inférieure (16) s'étendant sous la forme d'une extension sans raccord dudit fond de chargement (6) dans la configuration escamotée.
